# EUROPEAN PATENT APPLICATION

(11) **EP 2 279 959 A1**
(43) Date of publication of application: **02.02.2011**
(21) Application number: 09382105.6
(22) Date of filing: 01.07.2009
(51) Int. Cl.: B65D 19/44, B65D 85/48, B65G 49/06

(54) **Support for laminar elements**

(71) Applicant: Vitro Cristalglass, S.L., 28947 Fuenlabrada, Madrid (ES)
(72) Inventor: Alvarez Vega, Jose Manuel, 28947 Fuenlabrada, Madrid (ES)
(74) Representative: Capitan Garcia, Maria Nuria

(57) **Abstract**

The present invention consists of a support or trestle for laminar elements that includes a device for fastening the laminar elements, adjustable to adapt to the dimensions and number of these and removable to simplify unloading the said laminar elements.

## Description

### TECHNICAL FIELD OF THE INVENTION

The present invention lies in the field of transport of laminar elements, preferably of glass, and relates to a support or trestle that includes a device for fastening the laminar elements that is adjustable to the dimensions and number of these elements and can be removed to simplify the unloading of the said laminar elements.

### BACKGROUND OF THE INVENTION

Supports or trestles are known for transporting laminar elements such as glass sheets in which these sheets are fastened to the support during transport using a strap and a plastic coating.

Once the sheets reach their destination, the strap and the plastic coating are destroyed, leaving the sheets simply leaning against the support.

However, it is common for the sheets to be of different sizes and to require delivery to different work stations in a factory, so that they must be transported to more than one location; thus, when they are delivered to the second location they are unfastened, representing a hazard or simply not fulfilling the safety requirements in force.

In addition, when the sheets must be transported in a construction site the displacement to one or more locations, as in the previously described case, becomes more difficult due to the complexity of vehicle transit common in construction sites, given the presence of bumps, potholes, etc. that increase the likelihood that the sheets will break, particularly so when these have a large size.

To overcome these drawbacks, the present invention proposes a support with a fastening device for the laminar elements, adjustable in length to adapt to the different sizes of the laminar elements, adjustable in width to adapt to the thickness of the assembly of laminar elements and removable to simplify unloading of the laminar elements.

In addition, the fastening device of the support is also reversible; this is, after releasing the sheets at the first delivery location, whether by removing it or by the adjustment allowing to release the laminar sheets, it is possible to fasten them again under the same conditions of fastening and safety as initially, thereby transporting them to different delivery locations without danger of the laminar sheets falling.

Moreover, to minimize the risk of breakage of the laminar elements of large size normally used in a construction site, the device of the invention can include an accessory for this purpose.

### DESCRIPTION OF THE INVENTION

The invention is a support for laminar elements provided with a device for fastening said laminar elements to said support, which comprises at least: a central arm; a lateral arm on the end of said central arm; an angular arm on the end of said lateral arm; first means for fastening the central arm to the lateral arm; and second means for fastening the lateral arm to the angular arm.

Optionally, the support comprises a central arm, two T-shaped lateral arms, four L-shaped angular arms and the corresponding first and second fastening means.

Furthermore, also optionally, it is possible, using third fastening means, to join to some of the aforementioned angular arms a support arm by way of accessory, which can comprise two segments forming a T.

### BRIEF DESCRIPTION OF THE DRAWINGS

The present descriptive memory is completed with a set of figures that illustrate the preferred embodiment of the invention in a non-limiting way.

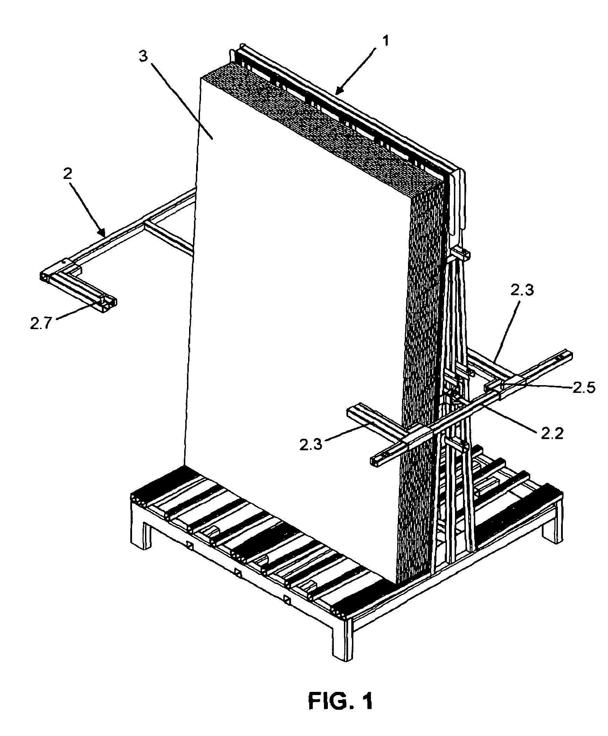

Figure 1 shows a perspective view of a preferred embodiment of the invention, with the arms on the right-hand side in the fastening position and those of the left-hand side in the position releasing the laminar elements.

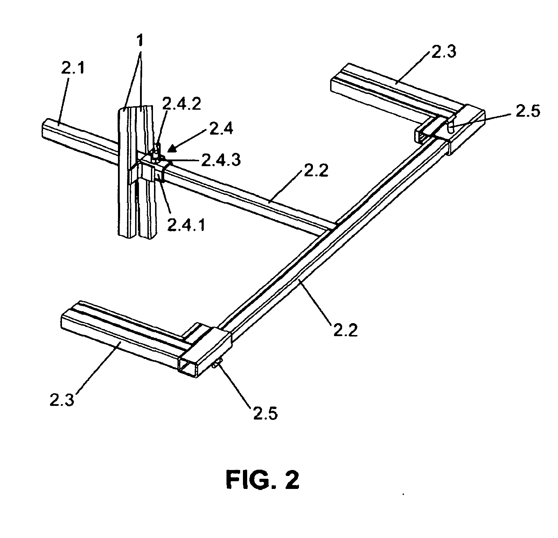

Figure 2 shows an enlargement of the arms and fastening means of the preferred embodiment of the invention represented in the previous figure.

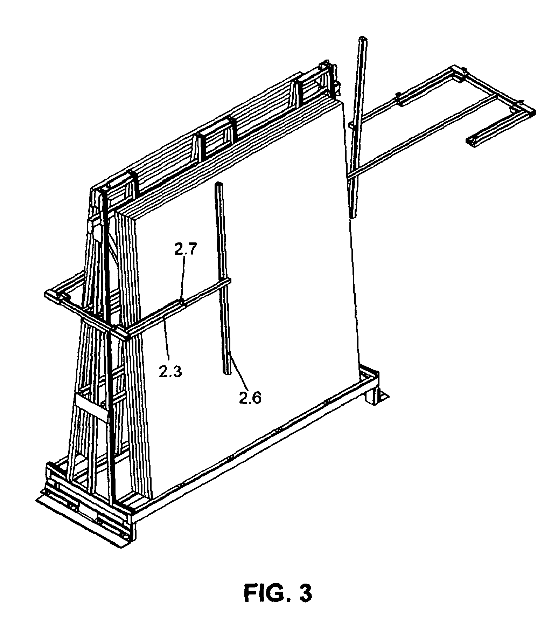

Figure 3 shows a perspective view of another embodiment of the invention showing the option of a support arm and its corresponding fastening means, with the arms of the left-hand side in fastening position and the arms of the right-hand side in the position releasing the laminar elements.

### DETAILED DESCRIPTION OF THE PREFERRED EMBODIMENT OF THE INVENTION

The present invention relates to a support (1) or trestle for transporting laminar elements (3), preferably of glass, with a fastening device (2) for the laminar elements, adjustable for different sizes and numbers of laminar elements and removable to simplify unloading the said laminar elements.

For this purpose, the support (1) is constituted in a preferred embodiment, as shown in the figures, by a frame of the known type having two inclined faces for supporting the laminar elements (3) and a fastening device (2).

This fastening device (2) is formed by different arms, specified below, and by first, second and third means of fastening between the said arms.

One of the arms is the central arm (2.1), which can be a tubular element and more specifically a square-section tube.

The lateral arms (2.2) in the embodiment shown are formed by two segments forming a T, specifically two square-section tubes. In a simpler embodiment, one lateral arm (2.2) could be formed by two segments forming an L.

The angular arms (2.3) in the embodiment shown are formed by two segments defining an L, specifically two square-section tubes. In another embodiment, one angular arm (2.3) can have a different configuration, such as with one straight segment and one curved segment, its denomination not limiting its final form.

The support arm (2.6) in the embodiment shown is formed by two segments defining a T, specifically two square-section tubes.

The first fastening means (2.4) between the central arm (2.1) and the lateral arm (2.2) can be of any type known in the art used to attach arms of the above-described types. In the embodiment shown they are reversible, this is, they can attach and release the elements on which they are acting as many times as needed. In addition, this characteristic of the fastening means allows adjusting the relative position of the arms by sliding.

Specifically, the first fastening means (2.4) are formed by a fastening body (2.4.1), a threaded orifice (2.4.3) or a nut attached to it and a screw (2.4.2) that acts with said nut (2.4.3).

The fastening body (2.4.1) is mounted on an arm and has an inner orifice in which slides the second arm to attach. The fastening between the arms on which it acts takes place by turning the screw (2.4.2) so that it touches the arm that moves inside the body. This is, it acts by pressure or as a lock screw (2.4.2) in a manner known in the art.

The fastening body (2.4.1) also acts as a stop against the support (1), establishing a fastening of the position of the central arm (2.1) with respect to this support (1).

The second fastening means (2.5) between the lateral arm (2.2) and the angular arm (2.3) act similarly to the first fastening means (2.4) and include the same characteristics of reversibility and regulation as these. However, in this embodiment and in order to simplify and reduce the cost of the support (1), these means comprise a screw (2.4.2) and a threaded orifice or nut (2.4.3) in an arm, of the same type as in the first fastening means (2.4).

The third fastening means (2.7) between the angular arm (2.3) and the support arm (2.6) are similar and act similarly to the second fastening means (2.5), thus comprising a threaded orifice or nut (2.4.3) in the corresponding angular arm (2.3).

## Claims

1. Support (1) for laminar elements (3) **characterised by** having a fastening device (2) for fastening said laminar elements to said support (1), which comprises at least: a central arm (2.1); a lateral arm (2.2) located on an end of said central arm (2.1); an angular arm (2.3) located at the end of said lateral arm (2.2); first fastening means (2.4) between the central arm (2.1) and the lateral arm (2.2) and second fastening means (2.5) between the lateral arm (2.2) and the angular arm (2.3).

2. Support (1) for laminar elements (3) according to claim 1, **characterised by** having two lateral arms and four angular arms placed in pairs on the ends of the lateral arms.

3. Support (1) for laminar elements (3) according to claim 1, **characterised in that** the first fastening means (2.4) comprise a fastening body (2.4.1), a screw (2.4.2) and a nut (2.4.3).

4. Support (1) for laminar elements (3) according to claim 1, **characterised in that** the second fastening means (2.5) comprise a screw (2.4.2) and a threaded orifice or nut (2.4.3).

5. Support (1) for laminar elements (3) according to claim 1, **characterised in that** the lateral arm (2.2) comprises two segments joined in an L shape.

6. Support (1) for laminar elements (3) according to claim 1, **characterised in that** the lateral arm (2.2) comprises at least two segments joined in a T shape.

7. Support (1) for laminar elements (3) according to claim 1, **characterised in that** the angular arm (2.3) comprises two segments joined in an L shape.

8. Support (1) for laminar elements (3) according to claim 1, **characterised in that** it includes a support arm (2.6) and third fastening means (2.7) for joining the same to an angular arm (2.3).

9. Support (1) for laminar elements (3) according to claim 8, **characterised in that** the support arm (2.6) comprises two segments forming a T shape.

10. Support (1) for laminar elements (3) according to claim 8, **characterised in that** the third fastening means (2.7) comprise a screw (2.4.2) and a threaded orifice or nut (2.4.3).
